# EUROPEAN PATENT APPLICATION

(11) **EP 2 075 725 A2**
(43) Date of publication of application: **01.07.2009**
(21) Application number: 08254134.3
(22) Date of filing: 23.12.2008
(51) Int. Cl.: G06F 21/00

(54) **Securing content for playback**

(30) Priority: 31.12.2007 US 6282
(71) Applicant: Intel Corporation, Santa Clara, CA 95054 (US)
(72) Inventor: Vembu, Balaji, Folsom, California 95630 (US); Sreenivas, Aditya, Folsom, California 95630 (US); Gandhi, Wishwesh, Folsom, California 95630 (US)
(74) Representative: Beresford, Keith Denis Lewis

(57) **Abstract**

A graphics engine may include a decryption device, a renderer, and a sprite or overlay engine, all connected to a display. A memory may have a protected and non-protected portions in one embodiment. An application may store encrypted content on the non-protected portion of said memory. The decryption device may access the encrypted material, decrypt the material, and provide it to the renderer engine of a graphics engine. The graphics engine may then process the decrypted material using the protected portion of the memory. Only graphics devices can access the protected portion of the memory in at least one mode, preventing access by outside sources. In addition, the protected memory may be stolen memory that is not identified to the operating system, making that stolen memory inaccessible to applications running on the operating system.

## Description

### Background

This relates generally to the playback on a computer with a graphics processor.

Various types of secure content may be received to be played back on a computer. For example, pay per view video or proprietary content may be received on a computer system for playback. Digital versatile disk (DVD) content may also be played on computers. The content may arrive in an encrypted fashion and, therefore, cannot easily be intercepted in route to the receiving computer.

However, once the content arrives at the computer, it may be decrypted for playback. Once decrypted, it may be accessed by malevolent software on the computer system and stolen by unauthorized entities. Unauthorized copies of software, DVD disks, games, videos, and other content may be made in this way.

### Brief Description of the Drawings

Figure 1 is a system depiction for one embodiment of the present invention;
Figure 2 is a depiction of a protected execution mode in accordance with one embodiment of the present invention;
Figure 3 is a flow chart for one embodiment; and
Figure 4 is a system depiction for one embodiment.

### Detailed Description

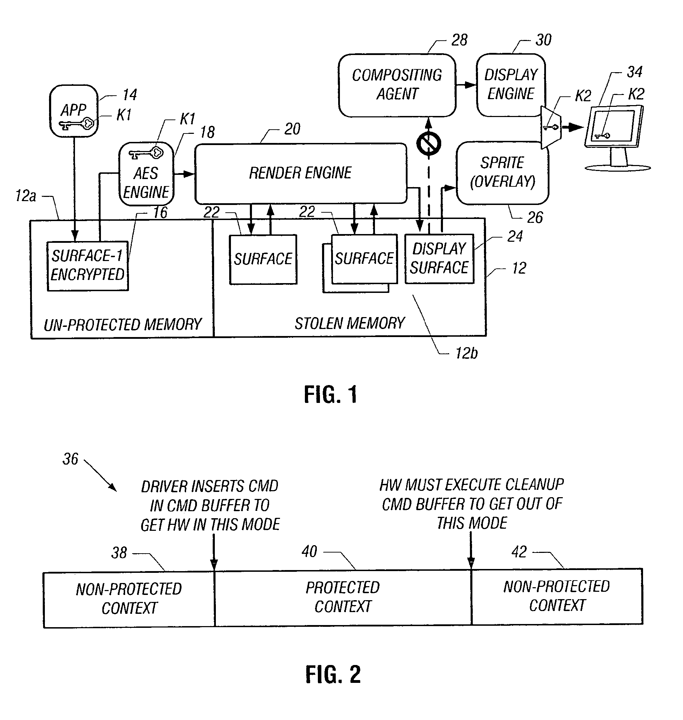

Referring to Figure 1, a computer system 10 may receive encrypted content. The computer system 10 may include a graphics engine. A graphics engine is hardware that performs graphics processing tasks independently of the computer's central processing unit(s). A graphics engine may include a graphics coprocessor, a graphics accelerator, a display adapter, or a graphics adapter.

Encrypted content may include any kind of encrypted material, including graphics, video, still pictures, text, games, software, or data. The encrypted information may come in from an application 14 which includes a key for decryption. The incoming data may be stored in a memory 12 within an unprotected memory portion 12a thereof. In one embodiment, the memory 12 may be associated with a graphics engine. While memory 12 is shown as one memory with protected and unprotected regions, separate memories may also be used. The memory 12 may include an integrated or external memory controller. In one embodiment, the memory 12 is system memory.

As shown in Figure 1, the encrypted material is stored on a buffer or surface 16. Even though the memory 12a is unprotected, because the information is still encrypted, security is maintained.

When the encrypted content is needed, it may be read from the encrypted surface 16 in the unprotected memory 12a by an engine 18. In one embodiment, the engine 18 may be an encryption/decryption engine. In one embodiment, the engine 18 may implement the Advanced Encryption Standard (AES) developed by the National Institute of Standards and Technology (NIST), Washington, D.C. The engine 18 may be responsible for decrypting the encrypted content using a key, as indicated by the key K1.

However, rather than storing the decrypted information, the engine 18 passes it on to a renderer engine 20 which is part of a graphics engine responsible for processing the content for display.

In the course of rendering graphical information for display, the renderer engine 20 stores various information. It may store information in buffers or surfaces 22 within a stolen memory 12b. Stolen memory 12b is protected against access by any entity other than an authorized entity. While it stores the information on the surfaces 22 in an unencrypted fashion, hardware, in the form of the renderer engine 20, prevents access to the information by non-graphics engine hardware.

The memory 12b may be "stolen" by the basic input/output system. As used herein, "stolen memory" describes memory that is not available to the operating system. It may include buffers that are in use for sorting or for hashing operations, such as query work space memory or for those buffers that are being used as generic memory stores for allocations to store internal data structures, such as locks, transaction context, and connection information. Stolen memory is not identified to the operating system. As a result, the operating system and applications running on the operating system have no way to access the stolen memory. Instead, only components of the graphics engine are allowed to access the stolen memory using a graphics engine driver.

In another embodiment the memory 12b may also be protected by a page table based protection where the page table is manipulated by a trusted entity other than the operating system. Other forms of protected memory could also be used.

Initially, the application 14 authenticates the graphics engine hardware of the computer system 10 and exchanges the session key with that hardware. Once the session is set up, the application 14 encrypts the data before sending it to the hardware. Once the session is set, the application 14 then outputs the encrypted data to regular unprotected memory 12a.

The engine 18, which is part of the graphics engine, reads data from the unprotected memory 12a and decrypts and writes out the result into protected memory 12b. The protected memory 12b is enforced by the hardware. Only graphics engine hardware, such as the engine 18, renderer engine 18, or the sprite or overlay engine 26, can access the stolen memory 12b. The graphics hardware does not allow decrypted data to be written to unprotected memory.

During hardware processing of the protected information, the data resides in the protected memory 12b. The protected memory 12b is created at boot time by the system basic input/output system (BIOS) which sets aside memory, called stolen memory, to locate the intermediate buffers. Once the BIOS allocates this protected memory and stores the parameters of the protected memory in hardware registers, the registers are locked to prevent access to data by manipulating protected memory boundaries. The graphics engine driver allocates surfaces in protected memory when playing back protected content. These surfaces or buffers are called protected surfaces. The hardware has specific mechanisms to ensure the protected memory is not accessible to any software running on the system 10 or to non-graphics hardware devices. The Application will ensure that protected memory is setup correctly before delivering content to the hardware.

The graphics engine hardware also has a protected mode of execution that ensures that no graphics operation can cause the data from protected memory to be copied into unprotected memory. This mode allows protection of the data during hardware processing, without having to check the graphics commands or operations submitted by software. Otherwise, a software driver may have been compromised and might attempt to get the protected data.

Note that a display surface 24 cannot be accessed by the compositing agent 28 in one embodiment. Composition is a software component on operating systems. Composition controls how different windows, the user is using, get merged into the final display. Composition allocates buffers for the various images and then merges them and points hardware to the merged image. One example of a compositing agent is Aero composition on Microsoft Vista operating systems.

The compositing agent runs on the computer's central processing unit, not the graphics engine. Therefore, it is prevented from accessing protected memory 12b.

In other embodiments, with trusted compositing, the display engine 30 could be used for all the data display. In trusted compositing, the composition agent can, however, direct the graphics engine to composite the buffers together to produce the resulting screen buffer that can be displayed using the regular display engine.

Instead, the graphics engine hardware uses a sprite or overlay engine 26 to output graphics engine data for display. The display 34 displays the combined data from the display engine and the sprite overlay engine. As a result, there is no need for the compositing agent to access the stolen memory 12b.

The compositing agent 28 feeds a display engine 30. The output from the display engine 30 is combined with the output from the sprite or overlay engine 26 to provide a display on the display 34. The video from the stolen memory 12b bypasses the compositing agent 28 and goes directly to the overlay engine 26 in one embodiment. Content protection is provided between the combiner 32 and the display 34, as indicated by the key K2.

Referring to Figure 2, the non-protected context 38 enables writes to be directed anywhere. Thus, anything in the unprotected memory 12a may be written anywhere. In order to transition to protected context 40 from non-protected context 38, the graphics engine driver inserts a command in a command buffer to get the graphics engine hardware into the protected context mode. In the protected context mode, reads may be from protected or unprotected surfaces. Writes must go only to protected surfaces. In one embodiment, the limitation on writes may be implemented by a memory controller associated with the memory 12. In order to return to non-protected mode, the graphics engine hardware executes a cleanup command to get out of protected context mode.

The cleanup command erases any protected information that may have been temporarily stored in graphics engine hardware, such as the renderer engine 20. This prevents accessing temporary data no longer being used in the graphics engine hardware after the hardware has transitioned to the non-protected context 42.

The display hardware 34 may use new hooks to be able to read out of protected memory. The architecture may provide a mechanism for the application 14 to specify which of the display planes are allowed to access protected memory. Typical display engines have a number of displayed planes that can generate memory accesses and send data out through the display pipe.

In accordance with some embodiments of the present invention, an infrastructure for secure playback of content provides a mechanism for an application to securely authenticate the graphics engine before sending data to the graphics engine. It may also provide a secure encrypted channel for the application to send data to hardware. In some embodiments, data may be protected during hardware processing because intermediate buffers are inaccessible to any software running on the computer and to any hardware devices other than graphics engine devices.

In some embodiments, a mechanism prevents leakage of content without requiring checking of graphics commands issued by potentially malicious software. Some embodiments also provide a way for the display to read out the final displayable buffer and send it to a graphics subsystem which may be protected by High Bandwidth Digital Content Protection (HDCP). See HDCP Specification, Rev. 1.3, 21 December 2006, available from Digital Content Protection LLC, Beaverton, OR 97006.

In some embodiments, high density digital video disks (HD-DVD) may require significantly higher protection than standard digital video disks. The HD-DVD disks may contain encrypted content. The media player applications may contain Advanced Access Content System (AACS) keys obtained under license from the AACS licensing administrator that allows them to decrypt the content from the disk and then process it. See AACS LA, LLC, Beaverton, Oregon, 97006. However, when they pass the data downstream to the graphics engine on the way to the display, the content stays protected all the way. In some embodiments, that protection may be provided by the system shown in Figure 1.

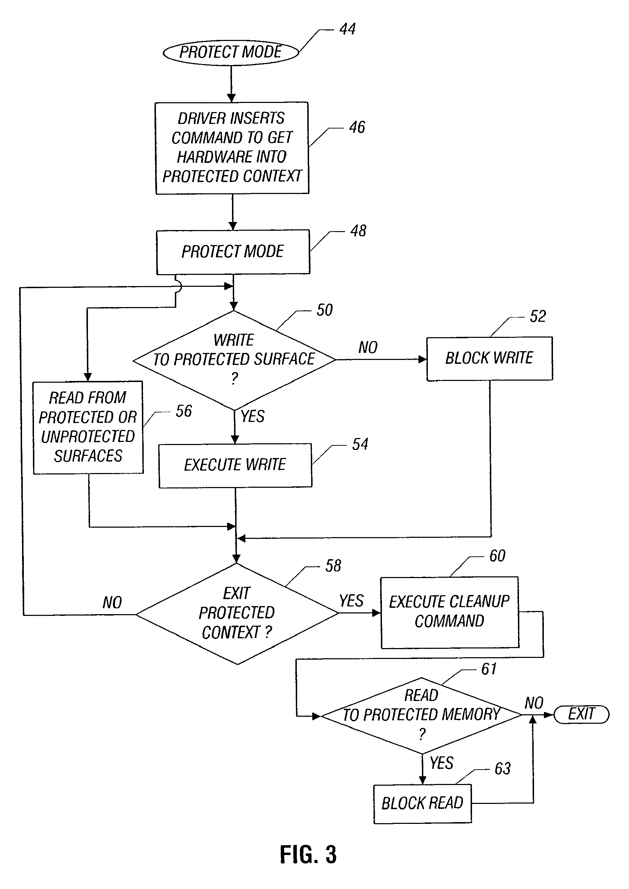

Referring to Figure 3, a protect mode 44 may be implemented in hardware in one embodiment. However, software and firmware implementations may also be considered. When implemented in software or firmware, instructions may be stored on a computer readable medium such as a semiconductor memory. Initially, a graphics engine driver inserts a command to place graphics hardware into the protected context, as indicated at block 46. Once in the protect mode, indicated at 48, a check at diamond 50 determines whether a write is to a protected surface. If not, the write is blocked, as indicated at 52. Otherwise, a write is executed, as indicated at block 54. A read from a protected or unprotected surface may be executed, as indicated at block 56.

A check at diamond 58 determines whether there is a request to exit the protected context. If not, the flow iterates to find more writes and reads to execute. If so, a graphics engine cleanup command is executed, as indicated at block 60. A check at diamond 61 determines if there is a read to protected memory. At this point, it is blocked (block 63) by the graphics hardware before exiting the protected context.

Thus, applications accessing on the operating system do not access the protected memory, which memory is unknown to the operating system. Other components can only seek to access protected memory via its memory controller that blocks accesses by non-graphics engine hardware.

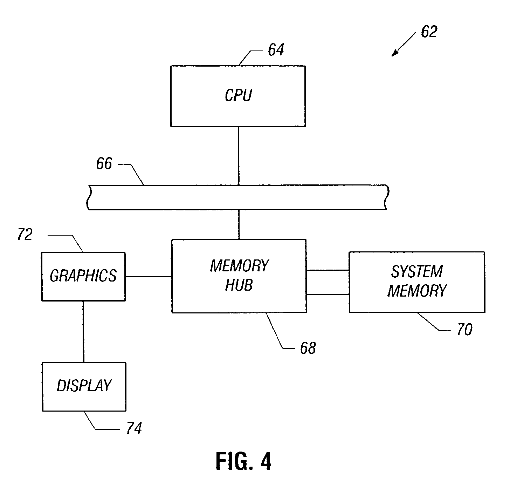

Referring next to Figure 4, a computer system 62 may have one or more central processing units 64 coupled by a bus 66 to a memory hub 68. In one embodiment, the memory hub acts as a memory controller for system memory 70. In one embodiment, the system memory 70 may implement the memory 12 of the embodiment of Figure 1. Thus, the system memory may have protected and unprotected portions in some embodiments. A graphics engine 72 is coupled to the memory hub 64. The graphics engine may include the renderer engine 20, the decryption engine 18, the display engine 30, and the sprite or overlay engine 26, in some embodiments. The display 74 may correspond to the display 34 of Figure 1 in some embodiments.

Thus, the operating system of the system 62 may be unable to access a stolen memory portion of the system memory 70. Non-graphics engine devices may also be unable to access this area. Therefore, the ability to steal content while it is decrypted for use by the graphics engine 72 may be limited or avoided in some embodiments.

References throughout this specification to "one embodiment" or "an embodiment" mean that a particular feature, structure, or characteristic described in connection with the embodiment is included in at least one implementation encompassed within the present invention. Thus, appearances of the phrase "one embodiment" or "in an embodiment" are not necessarily referring to the same embodiment. Furthermore, the particular features, structures, or characteristics may be instituted in other suitable forms other than the particular embodiment illustrated and all such forms may be encompassed within the claims of the present application.

While the present invention has been described with respect to a limited number of embodiments, those skilled in the art will appreciate numerous modifications and variations therefrom. It is intended that the appended claims cover all such modifications and variations as fall within the true spirit and scope of this present invention.

## Claims

1. A method comprising:
providing a graphics engine with a memory such that the memory can only be accessed by the graphics engine in at least one mode of the graphics engine.

2. The method of claim 1 including using a stolen memory as said memory.

3. The method of claim 2 including providing a memory including a first portion including said stolen memory and a second portion which is not stolen memory.

4. The method of claim 3 including enabling an application running on an operating system to access the second portion.

5. The method of claim 4 including enabling said application to store encrypted content in said second portion.

6. The method of claim 2 including providing a protected mode of operation and a non-protected mode of operation of said graphics engine, wherein in said protected mode, information can only be written to said stolen memory and in said non-protected mode, information can be written anywhere.

7. The method of claim 6 including erasing a buffer in said graphics engine when transitioning from said protected to said non-protected mode.

8. The method of claim 2 including providing a display engine and a sprite engine and accessing said stolen memory through said sprite engine and not through said display engine.

9. The method of claim 8 including enabling an application running on an operating system to access said display engine.

10. The method of claim 3 including providing a decryption engine to decrypt content stored in said second portion and to provide said decrypted content for storage on said first portion.

11. An apparatus comprising:
a decryption engine;
graphics engine including a renderer engine coupled to said decryption engine; and
a memory coupled to said renderer engine, said memory having a mode in which said memory can only be accessed by said graphics engine.

12. The apparatus of claim 11 wherein said memory includes a protected region and a non-protected region, said protected region can be accessed only by said graphics engine in said mode.

13. The apparatus of claim 11 wherein said memory includes stolen memory.

14. The apparatus of claim 13 including a protected mode of operation and a non-protected mode of operation, wherein in said protected mode, information can only be written to said stolen memory and in said non-protected mode, information can be written anywhere.

15. The apparatus of claim 11 including a display engine and a sprite engine, said memory only being accessible from said sprite engine and not said display engine.
